(19) Europäisches Patentamt
European Patent Office
Office européen des brevets

(11) **EP 1 697 649 B1**

(12) **EUROPEAN PATENT SPECIFICATION**

(45) Date of publication and mention
of the grant of the patent:
**19.03.2008 Bulletin 2008/12**

(21) Application number: **04806323.4**

(22) Date of filing: **09.12.2004**

(51) Int Cl.:
**F16D 3/205** (2006.01)

(86) International application number:
**PCT/IB2004/004048**

(87) International publication number:
**WO 2005/064175 (14.07.2005 Gazette 2005/28)**

(54) **CONSTANT VELOCITY UNIVERSAL JOINT**

HOMOKINETISCHES KREUZGELENK

JOINT HOMOCINETIQUE

(84) Designated Contracting States:
**DE FR GB**

(30) Priority: **22.12.2003 JP 2003425109**

(43) Date of publication of application:
**06.09.2006 Bulletin 2006/36**

(73) Proprietors:
• **Toyota Jidosha Kabushiki Kaisha**
  **Toyota-shi, Aichi-ken, 471-8571 (JP)**
• **JTEKT CORPORATION**
  **Chuo-ku,**
  **Osaka (JP)**

(72) Inventors:
• **ANDO, Atsushi**
  **Kariya-shi,**
  **Aichi-ken 448-8652 (JP)**
• **SATO, Tomohiko**
  **Toyota-shi,**
  **Aichi-ken 471-8571 (JP)**
• **MATSUMOTO, Takumi**
  **Toyota-shi,**
  **Aichi-ken 471-8571 (JP)**
• **YAMAMOTO, Takeo**
  **Toyota-shi,**
  **Aichi-ken 471-8571 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**US-A- 5 171 185      US-A1- 2003 060 291**
**US-B1- 6 322 453**

**Description**

BACKGROUND OF THE INVENTION

1. Field of the Invention

The invention relates to a constant velocity universal joint in which a double roller type roller unit is fitted to a leg shaft. More specifically, the invention relates to a constant velocity universal joint in which a convex sphere is formed in a leg shaft, and a concave sphere which is engaged with the convex sphere is formed in an inner roller of the roller unit.

2. Description of the Related Art

A constant velocity universal joint is used in a drive shaft for a vehicle, and the like. The constant velocity universal joint connects two shafts on a drive side and a driven side such that a rotational force can be transmitted in a constant velocity even when there is an angle between the two shafts. A constant velocity universal joint including a leg shaft and a roller, for example, a tripod constant velocity universal joint is known. In the case of the tripod constant velocity universal joint, an inner joint member is connected to one shaft, an outer joint member is connected to the other shaft, and a roller fitted to the leg shaft is housed in the guide groove of the outer joint member, whereby the two shafts are connected to each other and torque is transmitted. The inner joint member includes three leg shafts that protrude in a radial direction. The outer joint member is a hollow cylinder including three guide grooves that extend in an axial direction of the outer joint member.

Document US 5 171 185 is considered to be the closest prior art and discloses a constant velocity universal joint with the features of the preamble of claim 1.

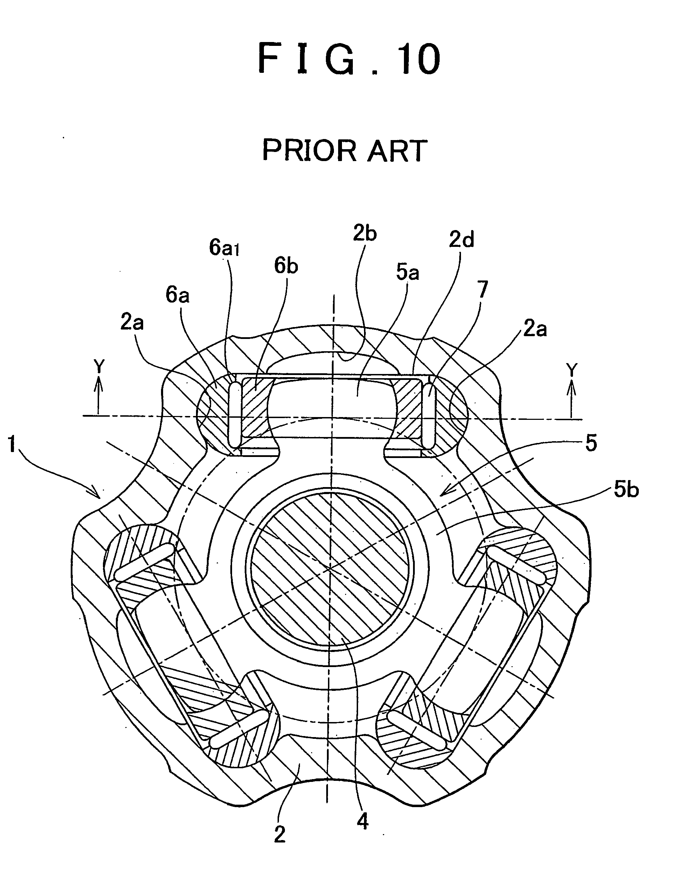

As shown in FIG. 10, in the tripod type constant velocity universal joint that is known, a roller 6 includes an inner roller 6b and an outer roller 6a that can be moved in the axial direction with respect to each other such that the roller 6 can be moved in parallel along a guide groove 2a formed in an outer joint member 2. A convex sphere is formed in a tip portion of a leg shaft 5a, and a concave sphere is formed in an inner peripheral surface of the inner roller 6b such that the leg shaft 5a and the inner roller 6b can be oscillated with respect to each other (for example, refer to Japanese Patent Laid-Open Publication No. 2002-147482). With the configuration, when a joint 1 is rotated with a joint angle being present, the inner roller 6b fitted to the leg shaft 5a is moved in the axial direction with respect to the outer roller 6a. However, the outer roller 6a is moved only in parallel along the guide groove 2a. Therefore, less friction occurs as compared to when the entire roller 6 is displaced in the axial direction. Thus, it is possible to suppress a thrust force of the outer joint member 2 in the axial direction that is generated due to the friction, and vibration generated due to the thrust force.

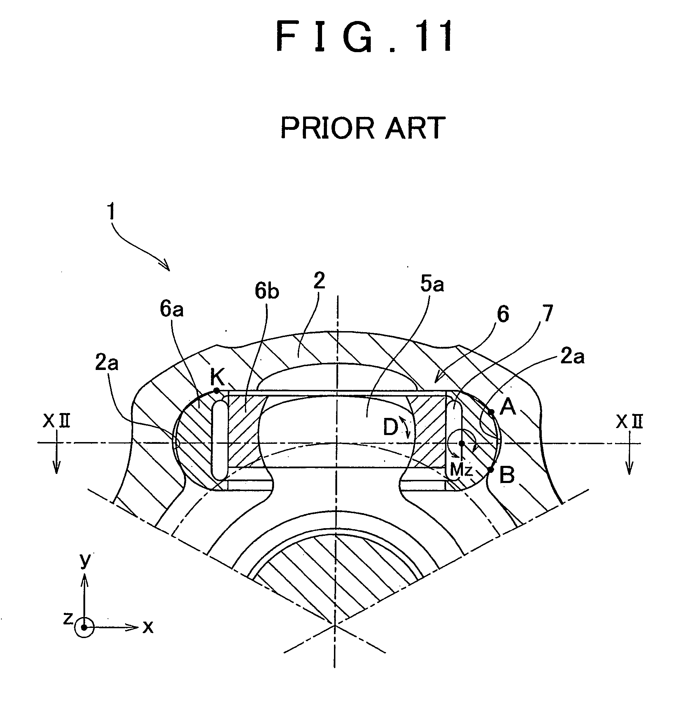

In such a constant velocity universal joint having the aforementioned structure, the outer roller may make angular contact with the guide groove of the outer joint member in order to make the posture of the outer roller stable. FIG. 11 shows a case where the outer roller 6a makes angular contact with the guide groove 2a of the outer joint member 2. The outer roller 6a makes contact with the guide groove 2a at contact points A and B that are symmetrical with respect to a plane which passes through the center of the outer roller 6a in the axial direction and which is perpendicular to the axis.

However, when the outer roller makes angular contact with the groove of the outer joint member, since a contact point between the leg shaft and the inner roller is moved due to rotation of the constant velocity universal joint, the thrust force is generated in the axial direction of the outer joint member (hereinafter, referred to as "Z-axis direction"), and vibration of the constant velocity universal joint member is generated due to the thrust force, as described in detail below.

The reason why the aforementioned thrust force is generated will be described in detail with reference to FIG. 11. When the constant velocity universal joint 1 is rotated with the joint angle being present, the leg shaft 5a and the inner roller 6b fitted to the leg shaft 5a are moved in both axial directions of the inner roller 6b (hereinafter, referred to as "Y-axis direction"), and friction occurs between the inner roller 6b and a needle bearing 7. Therefore, the contact point between the leg shaft 5a and the inner roller 6b is moved along the inner sphere of the inner roller 6b as shown by an arrow D so that force balancing with the frictional force is generated at the contact point.

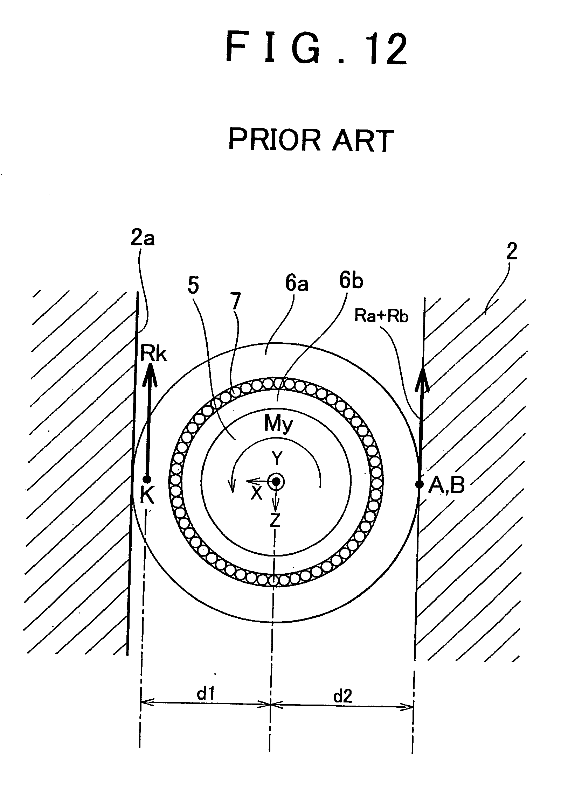

When the contact point between the leg shaft 5a and the inner roller 6b is moved as shown by the arrow D as described above, moment Mz around the Z-axis is generated between the outer roller 6a and the needle bearing 7. In order to balance with the moment Mz, a contact load Fk is generated, for example, at a point K on a rear surface side which is opposed to a side where a load is applied. When the roller unit 6 is moved in the Z-axis direction while the contact load Fk is applied, a frictional force Rk is generated at the point K. Further, moment My around the Y-axis is generated due to the frictional force Rk. Therefore, in order to balance the moment My generated due to the frictional force Rk, frictional forces Ra and Rb are generated also at the contact points A and B between the outer roller 6a and the outer joint member 2 on the side where the load is applied. FIG. 12 is a diagram explaining the directions and the magnitudes of the frictional forces Ra and Rb. FIG. 12 a schematic arrow cross-sectional view taken along line XII -XII in FIG. 11. As shown in FIG. 12, the frictional forces Ra and Rb that are generated at the contact points A and B in order to make the moment My zero are applied in the same direction as the direction in which the frictional force Rk is applied. Therefore, the thrust force is a resultant force of the three frictional forces Rk, Ra, and Rb as shown by an equation 1. Also, the frictional forces Ra and Rb are obtained according to an equation 2 indicating balance between the frictional forces Ra and Rb and the moment My. Thus, the large thrust force in the Z-axis direction is generated when the contact point between the leg shaft 5a and the inner roller 6b is moved.

$$(\text{Equation 1}) \qquad \text{Thrust force} = - (\text{Rk} + \text{Ra} + \text{Rb})$$

$$(\text{Equation 2}) \qquad \text{My} = \text{Rk} \times \text{d1} - (\text{Ra} + \text{Rb}) \times \text{d2} = 0.$$

In the equation 2, dl indicates a length in an X-axis direction from an axis of the inner roller to the point K, and d2 indicates a length in the X-axis direction from the axis of the inner roller to the point A (or point B).

SUMMARY OF THE INVENTION

In view of the above, it is an object of the invention to provide a constant velocity universal joint in which a thrust force generated during rotation can be suppressed.

An aspect of the invention relates to a constant velocity universal joint including (a) a hollow outer joint member in which plural guide grooves extending in an axial direction of the outer joint member are formed in an inner peripheral surface in an axial direction, and which is connected to a first shaft; (b) an inner joint member which is connected to a second shaft, and which is housed in the outer joint member; (c) plural leg shafts provided in the inner joint member, each of which protrudes in a radial direction of the second shaft, and in each of which a convex sphere is formed in a tip portion; and (d) a roller unit including an inner roller in which a concave sphere that is engaged with the convex sphere of each of the leg shafts is formed in an inner peripheral surface, and an outer roller which is housed in each of the guide grooves of the outer joint member so as to be slidable, the inner roller and the outer roller being movable with respect to each other in an axial direction of the inner roller and the outer roller through a rolling body, wherein each of the leg shafts and the inner roller can be oscillated with respect to each other, wherein (e) the leg shafts and the inner roller can be oscillated with respect to each other. The constant velocity universal joint is characterized in that (f) a cylindrical surface is formed in a radially outer surface of the outer roller; (g) a flat engagement surface which is engaged with the cylindrical surface of the outer roller is formed in a lateral surface of each of the guide grooves of the outer joint member; and (h) the cylindrical surface of the outer roller satisfies following two equations.

$$(\text{equation 3}) \qquad \text{W1} > \text{PCR} \, (1 - \cos \theta) \, / \, 2 + \mu_3 R_3 + \mu_2 R1$$

$$(\text{equation 4}) \qquad \text{W2} > 3\text{PCR} \, (1 - \cos \theta) \, / \, 2 - \mu_3 R_3 + \mu_2 R1$$

In these equations, W1 indicates a length in an axial direction of the cylindrical surface from a center of the cylindrical surface in the axial direction to an end portion of the cylindrical surface on an outer peripheral side of the outer joint member, W2 indicates a length in the axial direction of the cylindrical surface from the center of the cylindrical surface in the axial direction to an end portion of the cylindrical surface on a joint center side of the outer joint member, PCR indicates a distance from an axis of the inner joint member to a center of the convex sphere of each of the leg shafts, $\theta$ indicates a required maximum joint angle, R1 indicates a radius of the cylindrical surface of the outer roller, $R_3$ indicates a radius of the concave sphere of the inner roller, $\mu_2$ indicates a friction coefficient when the inner roller is moved with respect to the outer roller in an axial direction of the inner roller (16), and $\mu_3$ indicates a friction coefficient between the convex sphere of each of the leg shafts and the concave sphere of the inner roller.

In the constant velocity universal joint having the aforementioned structure, the right side of the equation 3 indicates a distance in the axial direction of the outer roller from the center of the cylindrical surface in the axial direction to a position where a load is concentrated (hereinafter, referred to as "load concentration position"), in the case where the leg shaft has been moved to an outer side of the outer joint member in the radial direction to the fullest extent. The right side of the equation 4 indicates a distance in the axial direction of the outer roller from the center of the cylindrical surface in the axial direction to the load concentration position, in the case where the leg shaft has been moved to a joint center side of the outer joint member in the radial direction to the fullest extent. Therefore, when the length of the cylindrical surface of the outer roller in the axial direction is set so as to satisfy the equations 3 and 4, the load concentration position of the outer roller is prevented from moving out of the cylindrical surface of the outer roller as long as the joint angle is equal to or smaller than the maximum joint angle 6. Therefore, the moment for tilting the outer roller, which is generated when the contact point between the leg shaft and the inner roller is moved, is absorbed between a flat surface portion of the guide groove of the outer joint member and the cylindrical surface of the outer roller. As a result, a contact load which is generated on the rear surface side is reduced, and accordingly, the frictional force is reduced. Thus, the thrust force can be suppressed during rotation.

Also, in the aforementioned constant velocity universal joint, a taper surface whose diameter decreases toward an end portion may be formed in each of axially both sides of the cylindrical surface of the outer roller, and a taper surface may be formed in the lateral surface of each of the guide grooves at a portion opposed to each taper surface of the outer roller, the taper surface formed in the lateral surface of each of the guide grooves becoming closer to a plane including an axis of the outer roller and an axis of the outer joint member toward each of axially both sides of the outer roller.

A chamfer that is a curved surface may be formed on each of axially both sides of the cylindrical surface of the outer roller.

Further, a concave curved surface may be formed in the lateral surface of each of the guide grooves at a portion opposed to each chamfer of the outer roller.

In the aforementioned constant velocity universal joint, a taper surface whose diameter decreases toward an end portion may be formed in each of axially both sides of the cylindrical surface of the outer roller, and a convex curved surface which protrudes toward an inner side of the outer joint member may be formed in the lateral surface of each of the guide grooves at a portion opposed to each taper surface of the outer roller.

With the constant velocity universal joint having the aforementioned structure, it is possible to more reliably prevent an end surface of the outer roller on the axially outer side from making contact with the inner surface of the outer joint member. Further, it is easy to manufacture the constant velocity universal joint in which the chamfer that is the curved surface is formed on each of axially both sides of the cylindrical surface of the outer roller, and the concave curved surface is formed in the lateral surface of each of the guide grooves at the portion opposed to each chamfer of the outer roller.

BRIEF DESCRIPTION OF THE DRAWINGS

The above mentioned and other objects, features, advantages, technical and industrial significance of this invention will be better understood by reading the following detailed description of exemplary embodiments of the invention, when considered in connection with the accompanying drawings, in which:

FIG. 1 is a cross sectional view of a constant velocity universal joint according to an embodiment of the invention, which is taken along a plane perpendicular to an axis of an outer joint member;

FIG 2 is a cross sectional view of the constant velocity universal joint in FIG. 1, taken along a plane including the axis of the outer joint member;

FIG. 3 is a cross sectional view of the constant velocity universal joint taken along the same plane as in FIG. 1, which explains a length W1 in an axial direction of the cylindrical surface from a center of a cylindrical surface in the axial direction to an end portion of the cylindrical surface on an outer peripheral side of the outer joint member;

FIG 4 is an enlarged view of a main portion in FIG. 3;

FIG. 5 is a cross sectional view of the constant velocity universal joint, taken along the same plane as in FIG. 1, which explains a length W2 in the axial direction of the cylindrical surface from the center of the cylindrical surface in the axial direction to an end portion of the cylindrical surface on a joint center side of the outer joint member;

FIG. 6 is an enlarged view of a main portion in FIG. 5;

FIG 7 is an enlarged view showing part of an outer roller and part of an outer joint member in a constant velocity universal joint according to a first modified example of the embodiment, which is different from the constant velocity universal joint in FIG. 1;

FIG. 8 is an enlarged view showing part of an outer roller and part of an outer joint member in a constant velocity universal joint according to a second modified example of the embodiment, which is different from the constant velocity universal joints in FIG 1 and FIG. 7;

FIG. 9 is an enlarged view showing part of an outer roller and part of an outer joint member in a constant velocity universal joint according to a third modified example of the embodiment, which is different from the constant velocity universal joints in FIG. 1, FIG. 7, and FIG. 8;

FIG. 10 is a view showing a constant velocity universal joint according to a conventional example, which is disclosed in Japanese Patent Laid-Open Publication No. 2002-147482;

FIG. 11 is a view showing a constant velocity universal joint according to a conventional example, in which an outer roller makes angular contact with a guide groove of an outer joint member; and

FIG. 12 is a schematic cross sectional view taken along line XII - XII in FIG. 11, which explains directions and magnitudes of frictional forces Ra and Rb generated at contact points A and B in FIG. 11.

DETAILED DESCRIPTION OF THE PREFERRED EMBODIMENT

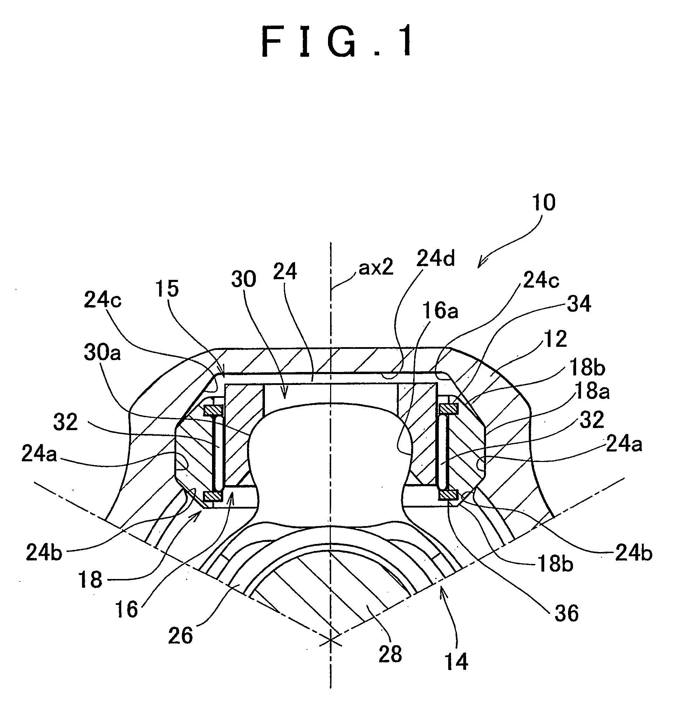

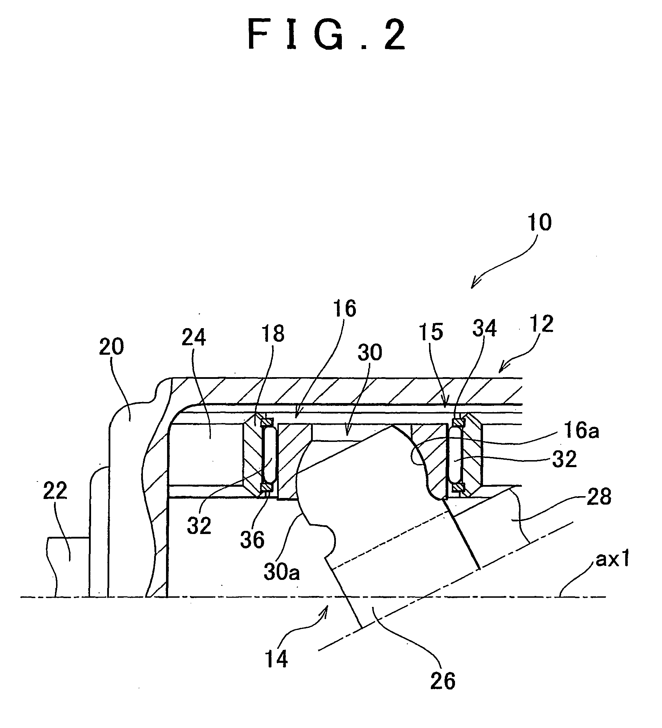

In the following description and the accompanying drawings, the present invention will be described in more detail in terms of exemplary embodiments. FIG. 1 is a cross sectional view of a constant velocity universal joint 10 according to the invention, taken along a plane perpendicular to an axis ax1 of an outer joint member 12. FIG 2 is a cross sectional view of the constant velocity universal joint 10, taken along a plane including the axis ax1 of the outer joint member 12.

The constant velocity universal joint 10 is of double roller type, and includes the outer joint member 12, an inner joint member 14, and a roller unit 15. The outer joint member 12 is a hollow member, and has a bottom portion 20 at one end in an axial direction. The other end (not shown) of the outer joint member 12 in the axial direction is opened. A first shaft 22 is connected to the bottom portion 20 of the outer joint member 12 such that the axis of the first shaft 22 overlaps with the axis ax1 of the outer joint member 12, whereby the outer joint member 12 and the first shaft 22 are integrated. Three guide grooves 24 extending in the direction of the axis ax1 are formed at equal intervals in a circumferential direction in an inner peripheral surface of the outer joint member 12 (FIG. 1 shows only one guide groove 24).

The inner joint member 14 is introduced from an opening portion (not shown) of the outer joint member 12 to the inside of the outer joint member 12, and thus the inner joint member 14 is housed in the outer joint member 12. The inner joint member 14 includes a cylindrical boss portion 26. A second shaft 28 is fitted into the boss portion 26 such that the second shaft 28 cannot be rotated with respect to the boss portion 26. Three leg shafts 30 protrude from the boss portion 26 in a radial direction (FIG. 1 shows only one leg shaft). The three leg shafts 30 protrude at equal intervals in the circumferential direction. A convex sphere 30a is formed at a tip portion of each of the leg shafts 30.

The roller unit 15 includes an inner roller 16 and an outer roller 18. The inner roller 16 is a cylindrical member. A concave spheres 16a are formed in an inner peripheral surface of the inner roller 16. The concave sphere 16a is engaged with the convex sphere 30a of each leg shaft 30 at the entire portion in the circumferential direction. The inner roller 16 cannot be moved with respect to the leg shaft 30 in the direction of the axis ax2, and can be rotated around the axis ax2. Also, the inner roller 16 is fitted to the leg shaft 30 such that the inner roller 16 and the leg shaft 30 can be oscillated with respect to each other.

The outer roller 18 is a cylindrical member. The inner roller 16 is fitted in an inner peripheral side of the outer roller 18. The axis of the outer roller 18 matches the axis ax2 of the inner roller 16. Also, the outer roller 18 is housed in the guide groove 24 such that the outer roller 18 cannot be moved in the direction of the axis ax2, and can be slid in the direction of axis ax1 of the outer joint member 12. The radially outer surface of the outer roller 18 includes a cylindrical surface 18a and taper surfaces 18b which are formed on axially both sides of the cylindrical surface 18a. Each of the taper surfaces 18b is formed such that the radius linearly decreases toward an end portion.

The guide groove 24 which houses the outer roller 18 includes paired flat lateral surfaces 24a, paired inner taper lateral surfaces 24b, paired outer taper lateral surfaces 24c, and a connection surface 24d. The lateral surfaces 24a are parallel with a plane including the axis ax1 of the outer joint member 12 and the axis ax2 of the outer roller 18. Each of the inner taper lateral surfaces 24b is connected to an inner line (on the joint center side of the outer joint member 12 in the radial direction) of each of the flat lateral surfaces 24a. Each of the outer taper lateral surfaces 24c is connected to an outer line of each of the flat lateral surfaces 24a. The connection surface 24d connects the paired outer taper surfaces 24c.

The length of each of the flat lateral surfaces 24a in a width direction is the same as the length of each cylindrical surface 18a of the outer roller 18 in the axial direction. Each of the paired flat lateral surfaces 24a is engaged with the cylindrical surface 18a of the outer roller 18 at the entire portion in the width direction. Therefore, the flat lateral surfaces 24a serve as the engagement surfaces. Each of the inner taper lateral surfaces 24b and the outer taper lateral surfaces 24c is formed so as to become closer to the plane including the axis ax2 of the outer roller 18 and the axis ax1 of the outer joint member 12 toward both sides in the direction of the axis ax2 of the outer roller 18. The inclination of each of the inner taper lateral surfaces 24b and the outer taper lateral surfaces 24c is milder than that of each taper surface 18b of the outer roller 18 such that each inner taper lateral surface 24b and each outer taper lateral surface 24c do not have contact with each taper surface 18b and each end surface of the outer roller 18 in the axial direction.

Plural needle rollers 32 which serve as rolling bodies are provided in the circumferential direction between the outer roller 18 and the inner roller 16 that constitute the roller unit 15. Snap rings 34 and 36 for preventing the needle rollers 32 from dropping off between the outer roller 18 and the inner roller 16 are fixed at axially both end portions of the inner peripheral surface of the outer roller 18.

Further, the length of the cylindrical surface 18a of the outer roller 18 is set so as to satisfy an equation 3 and an equation 4 described below.

$$\text{(Equation 3)} \quad W1 > PCR\,(1 - \cos\theta)\,/\,2 + \mu_3 R3 + \mu_2 R1$$

$$\text{(equation 4)} \quad W2 > 3PCR\,(1 - \cos\theta)\,/\,2 - \mu_3 R3 + \mu_2 R1$$

In these equations, W1 indicates a length in an axial direction of the cylindrical surface from a center of the cylindrical surface 18a in the axial direction to an end portion of the cylindrical surface on an outer peripheral side of the outer joint member 12, W2 indicates a length in the axial direction of the cylindrical surface from the center of the cylindrical surface 18a in the axial direction to an end portion of the cylindrical surface on a joint center side of the outer joint member 12, PCR indicates a distance from an axis of the inner joint member 14 to a center of the convex sphere 30a of each of the leg shafts 30, $\theta$ indicates a required maximum joint angle, R1 indicates a radius of the cylindrical surface 18a of the outer roller 18, R3 indicates a radius of the concave sphere 16a of the inner roller 16, $\mu_2$, indicates a friction coefficient between the inner roller 16 and the needle roller 32, and $\mu_3$ indicates a friction coefficient between the convex sphere 30a of each of the leg shafts 30 and the concave sphere 16a of the inner roller 16.

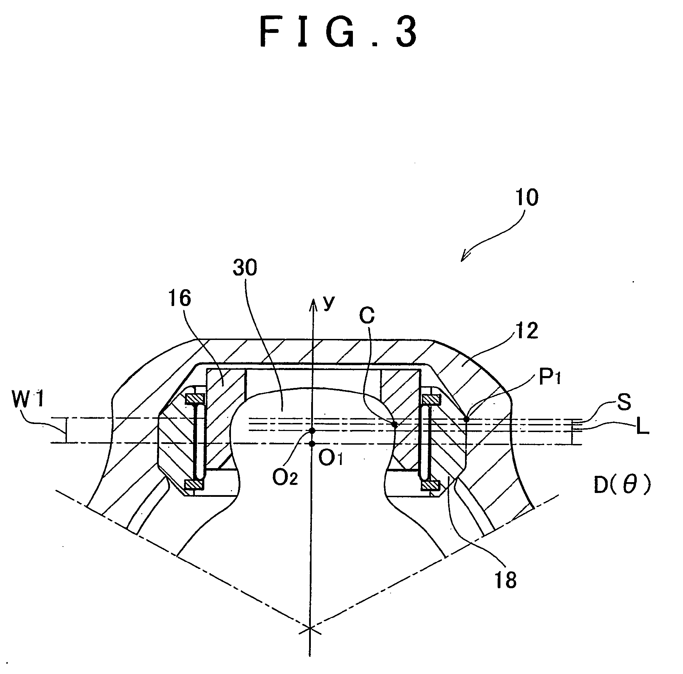

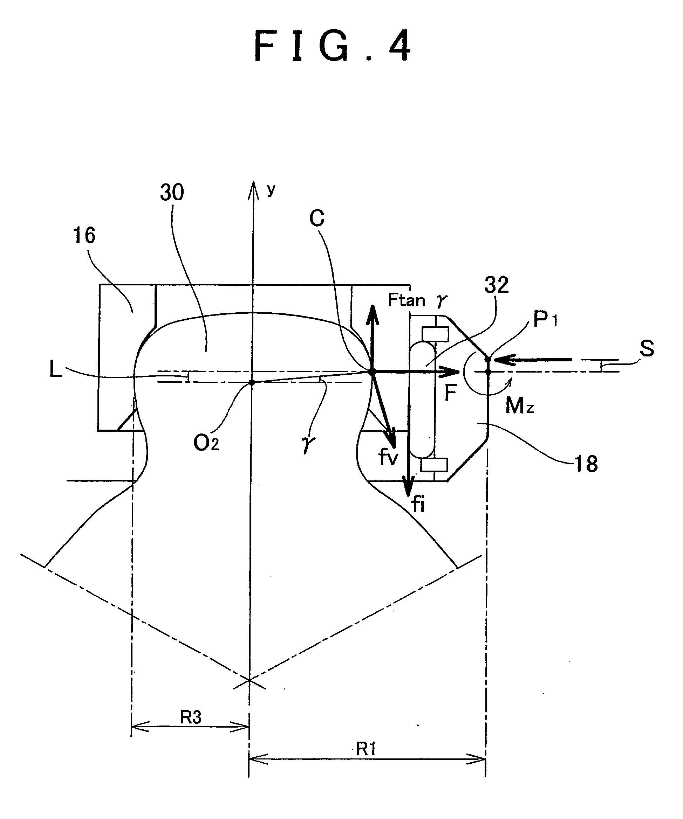

Next, the equation 3 will be described in detail with reference to FIG.3 and FIG. 4. In the constant velocity universal joint 10, the convex sphere 30a is formed at the tip of each of the leg shafts 30, and the concave sphere 16a that is engaged with each convex sphere 30a is formed in the inner peripheral surface of the inner roller 16. Therefore, when the constant velocity universal joint 10 is rotated with a joint angle being present, each of the leg shafts 30 and the inner roller 16 are moved with respect to the outer roller 18 in both directions of the axis ax2, and a contact point C between the leg shaft 30 and the inner roller 16 is moved. Therefore, moment Mz around the axis ax1 (hereinafter, referred to as "Z-axis") of the outer joint member 12, which tilts the outer roller 18 in a direction perpendicular to the Z-axis, is generated.

If the length of the cylindrical surface 18a of the outer roller 18 in the axial direction and the length of the flat lateral surface 24a of the guide groove 24 in the width direction are sufficiently long, a load is applied to the cylindrical surface 18a and the flat lateral surface 24a due to the moment Mz. It can be regarded that the load is applied at one point. The position of the point in the direction of the axis ax2 of the inner roller 16 (hereinafter, referred to as "Y-axis") is referred to as "load concentration position P". The load concentration position P is moved when the contact point C between the leg shaft 30 and the inner roller 16 is moved.

The maximum joint angle $\theta$ is the maximum value in a joint angle range in which occurrence of the thrust force and vibration caused due to the thrust force are required to be reduced. When the constant velocity universal joint 10 is rotated while the joint angle is the maximum joint angle $\theta$, a length from a center $O_1$ of the outer roller 18 (that is, a center $O_2$ of the convex sphere 30a of the leg shaft 30 while the joint angle is 0 degree) to an uppermost load concentration position $P_1$ in the Y-axis direction is the sum of a leg shaft movement amount D ($\theta$), a leg shaft contact point movement amount L, and a length S in the Y-axis direction from the contact point C to the load concentration position P (in the equation 3, the uppermost load concentration position $P_1$), as shown in FIG. 3 and an equation 5 described below. The uppermost load concentration position $P_1$ is the load concentration position P when the center $O_2$ of the convex sphere 30a of the leg shaft 30 has been moved to an outer side of the outer joint member 12 in the radial direction to the fullest extent. The leg shaft movement amount D ($\theta$) is the amount of movement of the convex sphere 30a of the leg shaft 30 while the joint angle is 0 degree. The leg shaft contact point movement amount L is a length in the Y-axis direction from the center $O_2$ of the convex sphere 30a to the contact point C between the leg shaft 30 and the inner roller 16.

$$\text{(Equation 5)} \quad D\,(\theta) + L + S$$

The leg shaft movement amount D ($\theta$) is obtained by a geometrical calculation based on a pitch circle radius PCR of the leg shaft 30 (that is, a distance from the axis ax1 of the inner joint member 14 to the center $O_2$ of the convex sphere 30a of the leg shaft 30), and the maximum joint angle $\theta$, according to an equation 6 described below.

$$\text{(Equation 6)} \quad D\,(\theta) = PCR\,(1 - \cos\theta)\,/\,2$$

As apparent from FIG. 4, the leg shaft contact point movement amount L is obtained according to an equation 7 described below.

$$\text{(Equation 7)} \quad L = R3 \times \sin \gamma$$

In the equation 7, R3 is a radius of the convex sphere 16a of the inner roller 16. Since the value of $\gamma$ is extremely small, it can be considered that $\sin \gamma$ is substantially equal to $\tan \gamma$. The value of $\tan \gamma$ is obtained according to an equation 8 indicating balance between forces in the Y-axis direction at the contact point C.

$$\text{(Equation 8)} \quad F \times \tan \gamma = fv \times \cos \gamma + fi$$

In the equation 8, F indicates a load applied to the inner roller 16 from the leg shaft 30 when the leg shaft 30 is rotated, fv indicates a frictional force that is generated when the contact point C is moved, and fi indicates a frictional force between the needle roller 32 and the inner roller 16. When $\mu_2$ indicates the frictional coefficient between the inner roller 16 and the needle roller 32, and $\mu_3$ indicates the frictional coefficient between the convex sphere 30a of the leg shaft 30 and the concave sphere 16a of the inner roller 16, fv and fi are obtained according to an equation 9 and an equation 10, respectively.

$$\text{(Equation 9)} \quad fv = \mu_3 \times F / \cos \gamma$$

$$\text{(Equation 10)} \quad fi = \mu_2 \times F$$

By substituting the equation 9 and the equation 10 in the equation 8, an equation 11 is obtained as described below.

$$\text{(Equation 11)} \quad \tan \gamma \text{ (which is substantially equal to } \sin \gamma) = \mu_3 + \mu_2$$

Accordingly, the leg shaft contact point movement amount L is obtained according to an equation 12 described below.

$$\text{(Equation 12)} \quad L = R3 \times \sin \gamma = R3 \, (\mu_3 + \mu_2)$$

Also, the length S in the Y-axis direction from the contact point C to the uppermost load concentration position $P_1$ is obtained according to an equation 13 indicating balance of the moment Mz concerning the inner roller 16 and the outer roller 18.

$$\text{(Equation 13)}$$

$$Mz = - (R1 - R3) \times (F \times \tan \gamma - fv \times \cos \gamma) + F \times S = 0$$

Since an equation 14 is obtained based on FIG. 4, the equation 13 can be changed to an equation 15 as described below.

$$\text{(Equation 14)} \quad F \times \tan \gamma - fv \times \cos \gamma = fi$$

$$\text{(Equation 15)} \quad -(R1 - R3) \times \text{fi} + F \times S = 0$$

Further, by substituting the equation 15 in the equation 10, an equation 16 is obtained as described below.

$$\text{(Equation 16)} \quad -(R1 - R3) \times \mu_2 \times F + F \times S = 0$$

By changing the equation 16, an equation 17 is obtained as described below.

$$\text{(Equation 17)} \quad S = \mu_2 \times (R1 - R3)$$

Based on the equation 6, the equation 12, and the equation 17, the equation 5 indicating the length in the Y-axis direction from the center $O_1$ of the outer roller 18 to the uppermost load concentration position $P_1$ is changed to an equation 18 described below. Thus, the right side of the equation 3 is obtained.

$$\text{(Equation 18)} \quad PCR\,(1 - \cos\theta)\,/\,2 + \mu_3 R3 + \mu_2 R1$$

Accordingly, when W1 indicates the length in the axial direction of the cylindrical surface from the center of the cylindrical surface 18a of the outer roller 18 in the axial direction to the end portion of the cylindrical surface 18a on the outer peripheral side of the outer joint member 12, and W1 satisfies the equation 3, the load concentration position P is prevented from moving out of the cylindrical surface 18a toward the upper side (that is, the outer peripheral side of the outer joint member).

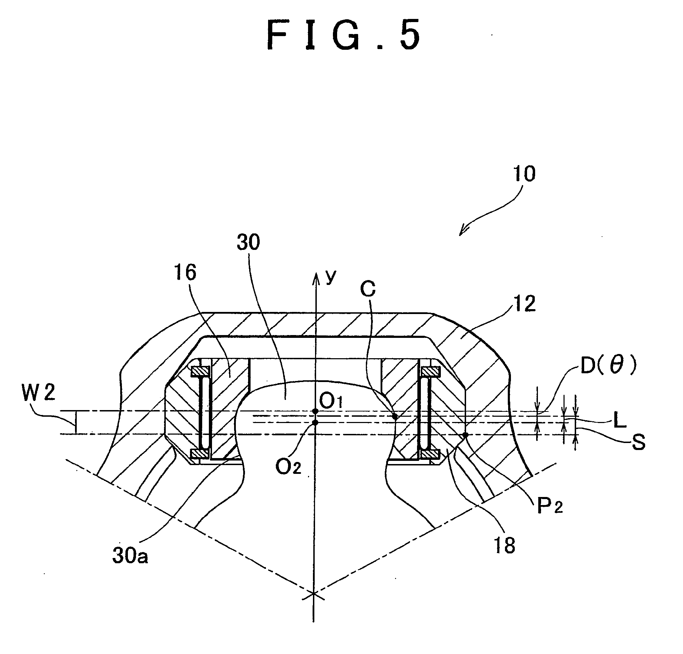

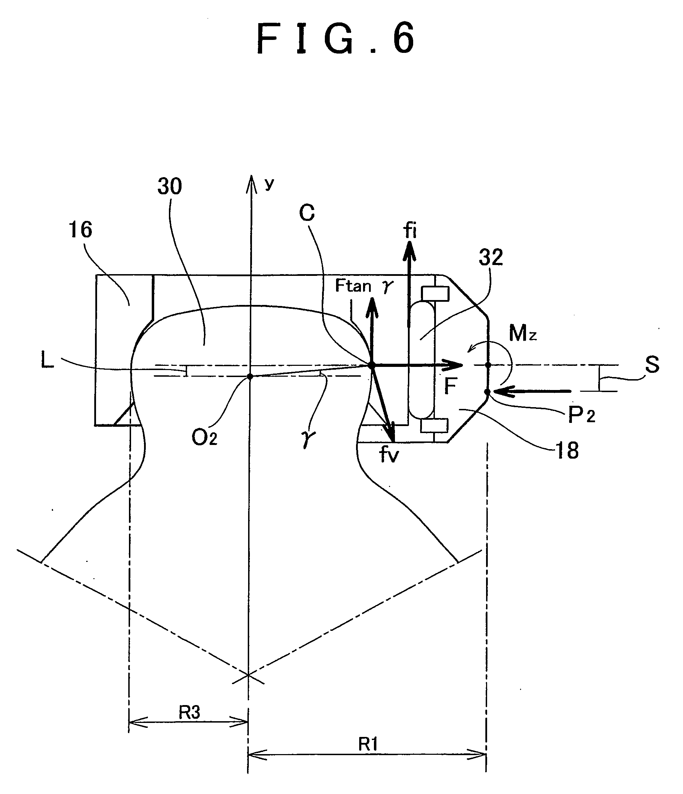

Next, the equation 4 will be described with reference to FIG. 5 and FIG. 6. When the constant velocity universal joint 10 is rotated while the joint angle is the maximum joint angle θ, a length in the Y-axis direction from the center $O_1$ of the outer roller 18 to a lowermost load concentration position $P_2$ is a value obtained by adding the length S in the Y-axis direction from the contact point C to the load concentration position P (in the equation 4, the lowermost load concentration position $P_2$) to a value obtained by subtracting the leg shaft contact point movement amount L from the leg shaft movement amount D (θ), as shown in FIG. 5 and an equation 19. The lowermost load concentration position $P_2$ is the load concentration position P when the center $O_2$ of the convex sphere 30a of the leg shaft 30 has been moved to the joint center side of the outer joint member 12 in the radial direction to the fullest extent.

$$\text{(Equation 19)} \quad D\,(\theta) - L + S$$

The leg shaft movement amount D (θ) is obtained by a geometric calculation based on the pitch circle radius PCR of the leg shaft 30 and the maximum joint angle θ, according to an equation 20 described below.

$$\text{(Equation 20)} \quad D\,(\theta) = 3PCR\,(1 - \cos\theta)\,/\,2$$

As apparent from FIG. 6, the leg shaft contact point movement amount L is obtained according to the afore-mentioned equation 7.

$$\text{(Equation 7)} \quad L = R3 \times \sin\gamma$$

Also, since the value of γ is extremely small, it can be considered that sin γ is substantially equal to tan γ. The value of tan γ can be obtained according to an equation 21 indicating balance between forces in the Y-axis direction at the contact

point C.

$$(\text{Equation } 21) \quad F \times \tan \gamma = fv \times \cos \gamma - fi$$

By substituting the equation 9 and the equation 10 in the equation 21, an equation 22 is obtained as described below.

$$(\text{Equation } 22) \quad \tan \gamma \,(\text{substantially equal to } \sin \gamma) = \mu_3 - \mu_2$$

Accordingly, the leg shaft contact point movement amount L is obtained according to an equation 23 described below.

$$(\text{Equation } 23) \quad L = R3 \times \sin \gamma = R3\,(\mu_3 - \mu_2)$$

The length S in the Y-axis direction from the contact point C to the lowermost load concentration position $P_2$ is obtained according to an equation 24 indicating balance of the moment Mz concerning the inner roller 16 and the outer roller 18.

$$(\text{Equation } 24)$$
$$Mz = -\,(R1 - R3) \times (F \times \tan \gamma - fv \times \cos \gamma) - F \times S = 0$$

Using the equation 14, the equation 24 can be changed to an equation 25 as described below.

$$(\text{Equation } 25) \quad -\,(R1 - R3) \times (-\,fi) - F \times S = 0$$

Further, by substituting the equation 10 in the equation 25, an equation 26 is obtained as described below.

$$(\text{Equation } 26) \quad (R1 - R3) \times \mu_2 \times F + F \times S = 0$$

By changing the equation 26, an equation 27 is obtained as described below.

$$(\text{Equation } 27) \quad S = \mu_2\,(R1 - R3)$$

Based on the equation 20, the equation 23, and the equation 27, the equation 19 indicating the length in the Y-axis direction from the center $O_1$ of the outer roller 18 to the lowermost load concentration position $P_2$ is changed to an equation 28 described below. Thus, the right side of the equation 4 is obtained.

$$(\text{Equation } 28) \quad 3PCR\,(1 - \cos \theta)\,/\,2 - \mu_3 R3 + \mu_2 R1$$

Accordingly, when W2 indicates the length in the axial direction of the cylindrical surface 18a from the center of the cylindrical surface 18a of the outer roller 18 in the axial direction to the end portion of the cylindrical surface 18a on the joint center side of the outer joint member 12, and W2 satisfies the equation 4, the load concentration position P is prevented from moving out of the cylindrical surface 18a toward the lower side (the joint center side of the outer joint member).

As described so far, according to the embodiment, the right side of the equation 3 indicates the distance in the direction of the axis ax2 of the outer roller 18 from the center of the cylindrical surface 18a in the axial direction to the load concentration position P in the case where the leg shaft 30 has been moved to the outer side of the outer joint member 12 in the radial direction to the fullest extent. The right side of the equation 4 indicates the distance in the direction of the axis ax2 of the outer roller 18 from the center of the cylindrical surface 18a in the axial direction to the load concentration position P in the case where the leg shaft 30 has been moved to the joint center side of the outer joint member 12 in the radial direction to the fullest extent. Therefore, when the length of the cylindrical surface 18a of the outer roller 18 in the axial direction is set so as to satisfy the equations 3 and 4, the load concentration position P of the outer roller 18 is prevented from moving out of the cylindrical surface 18a of the outer roller 18 as long as the joint angle is equal to or smaller than the maximum joint angle θ. Therefore, the moment Mz for tilting the outer roller 18, which is generated when the contact point between the leg shaft 30 and the inner roller 16 is moved, is absorbed between the flat surface portion 24a of the guide groove 24 of the outer joint member 12 and the cylindrical surface 18a of the outer roller 18. As a result, a contact load which is generated on the rear surface side is reduced, and accordingly, the frictional force is reduced. Thus, the thrust force can be suppressed during rotation.

According to the embodiment, the taper surfaces 18b are formed on axially both sides of the cylindrical surface 18a of the outer roller 18, and the taper lateral surfaces 24b and 24c are formed in the lateral surface of the guide groove 24, at portions opposed to the taper surfaces 18b. Therefore, it is possible to more reliably prevent the end surface of the outer roller 18 on the axially outer side from making contact with the inner surface of the outer joint member 12. Accordingly, it is possible to further suppress the frictional force generated due to contact therebetween, and the thrust force due to the frictional force.

Although the embodiment of the invention has been described in detail with reference to the accompanying drawings, the invention can be realized in other embodiments.

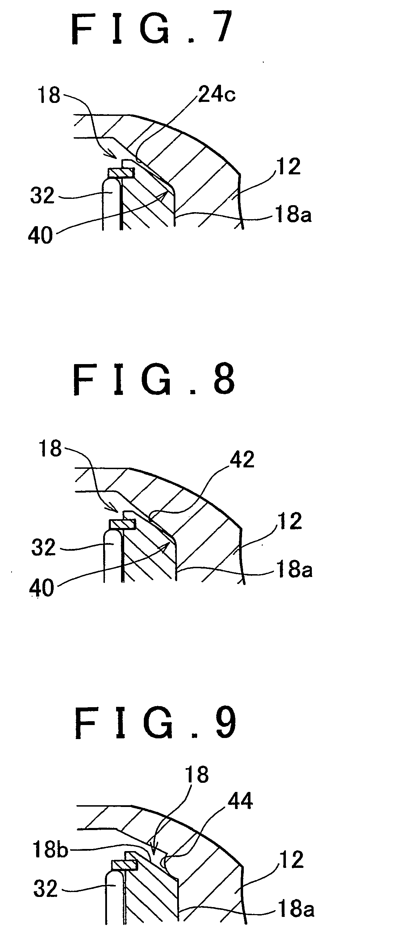

For example, in the aforementioned embodiment, the taper surfaces 18b are formed on axially both sides of the cylindrical surface 18a of the outer roller 18, and the taper lateral surfaces 24b and 24c are formed in the lateral surface of the guide groove 24 at the portions opposed to the taper surfaces 18b. However, the invention is not limited to the embodiment. For example, as a first modified example, a chamfer 40 that is a curved surface may be formed on each of axially both sides of the cylindrical surface 18a of the outer roller 18, as a substitute of part of the taper surface 18b, as shown in FIG. 7. Also, as a second modified example, a chamfer that is a curved surface 40 may be formed on each of axially both sides of the cylindrical surface 18a of the outer roller 18 as a substitute of part of the taper surface 18b, and a concave curved surface 42 may be formed on each of both sides of the flat lateral surface 24a of the guide groove 24, as a substitute of each of part of the taper surfaces 24b and 24c, or as a substitute of each of the entire taper surfaces 24b and 24c, as shown in FIG 8. Also, as a third modified example, a convex curved surface 44 that protrudes toward the inner side of the outer joint member 12 may be formed, as shown in FIG. 9. In the first modified example (FIG. 7), the second modified example (FIG 8), and the third modified example (FIG. 9), it is possible to more reliably prevent the end surface of the outer roller 18 on the axially outer side from making contact with the inner surface of the outer joint member 12, as in the aforementioned embodiment. Also, it is easy to manufacture the constant velocity universal joint in which chamfers 40 and 42 are formed on axially both sides of the cylindrical surface 18a of the outer roller 18, and on both sides of the flat lateral surface 24a of the guide groove 24 as in the second modified example (FIG. 8), as compared to the constant velocity universal joint in the aforementioned embodiment, the first modified example (FIG. 7), and the third modified example (FIG. 9).

Also, in the aforementioned embodiment, three leg shafts 30 are provided. However, four or more leg shafts may be provided.

## Claims

1.   A constant velocity universal joint including a hollow outer joint member (12) in which plural guide grooves (24) extending in an axial direction of the outer joint member (12) are formed in an inner peripheral surface, and which is connected to a first shaft (22); an inner joint member (14) which is connected to a second shaft (28), and which is housed in the outer joint member (12); plural leg shafts (30) provided in the inner joint member (14), each of which protrudes in a radial direction of the second shaft (28), and in each of which a convex sphere (30a) is formed in a tip portion; and a roller unit (15) including an inner roller (16) in which a concave sphere (16a) that is engaged with the convex sphere (30a) of each of the leg shafts (30) is formed in an inner peripheral surface, and an outer roller (18) which is housed in each of the guide grooves (24) of the outer joint member (12) so as to be slidable, the inner roller (16) and the outer roller (18) being movable with respect to each other in an axial direction of the inner roller (16) and the outer roller (18) through a rolling body (32), wherein each of the leg shafts (30) and the inner roller (16) can be oscillated with respect to each other, the constant velocity universal joint being **characterized in that**:

a cylindrical surface (18a) is formed in a radially outer surface of the outer roller (18); a flat engagement surface (24a) which is engaged with the cylindrical surface (18a) of the outer roller (18) is formed in a lateral surface of each of the guide grooves (24) of the outer joint member (12); and the cylindrical surface (18a) of the outer roller (18) satisfies following two equations,

$$W1 > PCR\,(1 - \cos\theta)\,/\,2 + \mu_3 R3 + \mu_2 R1$$

$$W2 > 3PCR\,(1 - \cos\theta)\,/\,2 - \mu_3 R3 + \mu_2 R1,$$

wherein

W1 indicates a length in an axial direction of the cylindrical surface (18a) from a center ($O_1$) of the cylindrical surface (18a) in the axial direction to an end portion of the cylindrical surface (18a) on an outer peripheral side of the outer joint member (12);

W2 indicates a length in the axial direction of the cylindrical surface (18a) from the center ($O_1$) of the cylindrical surface (18a) in the axial direction to an end portion of the cylindrical surface (18a) on a joint center side of the outer joint member (12);

PCR indicates a distance from an axis of the inner joint member (14) to a center ($O_2$) of the convex sphere (30a) of each of the leg shafts (30);

$\theta$ indicates a required maximum joint angle;

R1 indicates a radius of the cylindrical surface (18a) of the outer roller (18);

R3 indicates a radius of the concave sphere (16a) of the inner roller (16);

$\mu_2$ indicates a friction coefficient when the inner roller (16) is moved with respect to the outer roller (18) in an axial direction of the inner roller (16); and

$\mu_3$ indicates a friction coefficient between the convex sphere (30a) of each of the leg shafts (30) and the concave sphere (16a) of the inner roller (16).

2. The constant velocity universal joint according to claim 1, **characterized in that** a taper surface (18b) whose diameter decreases toward an end portion is formed in each of axially both sides of the cylindrical surface (18a) of the outer roller (18), and a taper surface (24b, 24c) is formed in the lateral surface of each of the guide grooves (24) at a portion opposed to each taper surface (18b) of the outer roller (18), the taper surface (24b, 24c) formed in the lateral surface of each of the guide grooves (24) becoming closer to a plane including an axis of the outer roller (18) and an axis of the outer joint member (12) toward each of axially both sides of the outer roller (18).

3. The constant velocity universal joint according to claim 1 or 2, **characterized in that** a chamfer (40) that is a curved surface is formed on each of axially both sides of the cylindrical surface (18a) of the outer roller (18).

4. The constant velocity universal joint according to claim 3, **characterized in that** a concave curved surface (42) is formed in the lateral surface of each of the guide grooves (24) at a portion opposed to each chamfer (40) of the outer roller (18).

5. The constant velocity universal joint according to claim 1, **characterized in that** a taper surface (18b) whose diameter decreases toward an end portion is formed in each of axially both sides of the cylindrical surface (18a) of the outer roller (18), and a convex curved surface (44) which protrudes toward an inner side of the outer joint member (12) is formed in the lateral surface of each of the guide grooves (24) at a portion opposed to each taper surface (18b) of the outer roller (18).

**Patentansprüche**

1. Gleichlaufgelenk, das ein hohles äußeres Gelenkselement (12), in dem mehrere Führungsrillen (24), die sich in einer axialen Richtung des äußeren Gelenkelements (12) erstrecken, in einer inneren Umfangsoberfläche ausgebildet sind, und das mit einer ersten Welle (22) verbunden ist; ein inneres Gelenkselement (14), das mit einer zweiten Welle (28) verbunden ist und das in dem äußeren Gelenkselement (12) aufgenommen ist; mehrere Schenkelwellen (30), die in dem inneren Gelenkselement (14) angeordnet sind, die jeweils in einer radialen Richtung der zweiten Welle (28) vorstehen und in einer jeweiligen derselben eine konvexe Abrundung (30) in einem Spitzenbereich ausgebildet ist; und eine Walzeneinheit (15) beinhaltet, die eine innere Walze (16) beinhaltet, in der eine konvexe Abrundung (16a), die mit der konvexen Abrundung (30a) einer jeweiligen der Schenkelwellen (30) in Eingriff steht, in einer inneren Umfangsoberfläche ausgebildet ist, und eine äußere Walze (18) beinhaltet, die in einer jeweiligen der Führungsrillen (24) des äußeren Gelenkselements aufgenommen ist, um gleitfähig zu sein, wobei die innere Walze (16) und die äußere Walze (18) zueinander in einer axialen Richtung der inneren Walze (16) und der äußeren Walze (18) durch einen Walzkörper (32) beweglich sind, wobei eine jeweilige der Schenkelwellen (30) und die innere Walze (16) zueinander oszilliert werden können, wobei das Gleichlaufgelenk **dadurch gekennzeichnet ist, dass** eine zylindrische Oberfläche (18) in einer radial äußeren Oberfläche der äußeren Walze (18) ausgebildet ist; eine flache Eingriffsoberfläche (24a), die mit der zylindrischen Oberfläche (18a) der äußeren Walze (18) in Eingriff steht, in einer seitlichen Oberfläche der Führungsrillen (24) des äußeren Gelenkelements (12) ausgebildet ist; und die zylindrische Oberfläche (18a) der äußeren Walze (18) die beiden folgenden Gleichungen erfüllt,

$$W1 > PCR \, (1 - \cos \theta) \, / \, 2 + \mu_3 \, R3 + \mu_2 \, R1$$

$$W2 > 3PCR \, (1 - \cos \theta) \, / \, 2 - \mu_3 \, R3 + \mu_2 \, R1,$$

wobei

W1 eine Länge in einer axialen Richtung der zylindrischen Oberfläche (18a) von einem Mittelpunkt ($O_1$) der zylindrischen Oberfläche (18a) in der axialen Richtung zu einem Endbereich der zylindrischen Oberfläche (18a) auf einer äußeren peripheren Seite des äußeren Gelenkelements (12) anzeigt;

W2 eine Länge in der axialen Richtung der zylindrischen Oberfläche (18a) vom Mittelpunkt ($O_1$) der zylindrischen Oberfläche (18a) in der axialen Richtung zu einem Endbereich der zylindrischen Oberfläche (18a) auf einer gemeinsamen mittleren Seite des äußeren Gelenkelements (12) anzeigt;

PCR einen Abstand von einer Achse des inneren Gelenkelements (14) zu einem Mittelpunkt ($O_2$) der konvexen Abrundung (30a) von einer jeweiligen der Schenkelwelle (30) anzeigt;

θ einen maximalen Soll-Gelenkswinkel anzeigt;

R1 einen Radius der zylindrischen Oberfläche (18a) der äußeren Walze (18) anzeigt;

R3 einen Radius der konkaven Abrundung (16a) der inneren Walze (16) anzeigt;

$\mu_2$ einen Reibungskoeffizienten anzeigt, wenn die innere Walze (16) in Bezug auf die äußere Walze (18) in einer axialen Richtung der inneren Walze (16) bewegt wird; und

$\mu_3$ einen Reibungskoeffizienten zwischen der konvexen Abrundung (30a) einer jeweiligen der Schenkelwellen (30) und der konkaven Abrundung (16a) der inneren Walze (16) anzeigt.

**2.** Gleichlaufgelenk nach Anspruch 1, **dadurch gekennzeichnet, dass** eine abgeschrägte Oberfläche (18b), deren Durchmesser zu einem Endbereich abnimmt, in einer jeweiligen von axial beiden Seiten der zylindrischen Oberfläche (18a) der äußeren Walze (18) ausgebildet ist, und eine abgeschrägte Oberfläche (24b, 24c) in der seitlichen Oberfläche einer jeweiligen der Führungsrillen (24) an einem Bereich ausgebildet ist, der einer jeweiligen abgeschrägten Oberfläche (18b) der äußeren Walze gegenüberliegt, wobei die abgeschrägte Oberfläche (24b, 24c), die in der seitlichen Oberfläche einer jeweiligen der Führungsrillen (24) ausgebildet ist, sich einer Ebene nähert, die eine Achse der äußeren Walze (18) und eine Achse des äußeren Gelenkelements (12) beinhaltet, zu einer jeweiligen der axial beiden Seiten (12) der äußeren Walze (18) nähert.

**3.** Gleichlaufgelenk nach Anspruch 1 oder 2, **dadurch gekennzeichnet, dass** eine Abschrägung (40), bei der es sich um eine gekrümmte Oberfläche handelt, auf einer jeweiligen der axial beiden Seiten der zylindrischen Oberfläche (18a) der äußeren Walze (18) ausgebildet ist.

**4.** Gleichlaufgelenk nach Anspruch 3, **dadurch gekennzeichnet, dass** eine konkav gekrümmte Oberfläche (42) in der seitlichen Oberfläche einer jeweiligen der Führungsrillen (24) an einem Beriech ausgebildet ist, der einer jeweiligen Abschrägung (40) der äußeren Walze (18) gegenüberliegt.

**5.** Gleichlaufgelenk nach Anspruch 1, **dadurch gekennzeichnet, dass** eine abgeschrägte Oberfläche (18b), deren Durchmesser zu einem Endbereich abnimmt, in einer jeweiligen der axial beiden Seiten der zylindrischen Oberfläche (18a) der äußeren Walze (18) ausgebildet ist, und eine konvex gekrümmte Oberfläche (44), die zu einer inneren Seite des äußeren Gelenkelements (12) vorsteht, in der seitlichen Oberfläche einer jeweiligen der Führungsrillen (24) an einem Bereich ausgebildet ist, der einer jeweiligen abgeschrägten Oberfläche (18b) der äußeren Walze (18) gegenüberliegt.

**Revendications**

1. Joint homocinétique universel comprenant un élément de joint extérieur creux (12) dans lequel plusieurs rainures de guidage (24) s'étendant dans une direction axiale de l'élément de joint extérieur (12) sont formées dans une surface périphérique intérieure, et qui est connecté à un premier arbre (22) ; un élément de joint intérieur (14) qui est connecté à un second arbre (28), et qui est logé dans l'élément de joint extérieur (12) ; plusieurs axes (30) placés dans l'élément de joint intérieur (14), chacun faisant saillie dans une direction radiale du second arbre (28), et dans chacun desquels une sphère convexe (30a) est formée dans une partie d'extrémité ; et une unité de roulement (15) comprenant un roulement intérieur (16) dans lequel une sphère concave (16a) qui est en prise avec la sphère convexe (30a) de chacun des axes (30) est formée dans une surface périphérique intérieure, et un roulement extérieur (18) qui est logé dans chacune des rainures de guidage (24) de l'élément de joint extérieur (12) de façon à pouvoir coulisser, le roulement intérieur (16) et le roulement extérieur (18) étant mobiles l'un par rapport à l'autre dans une direction axiale du roulement intérieur (16) et du roulement extérieur (18) par l'intermédiaire d'un corps de roulement (32), dans lequel chacun des axes (30) et le roulement intérieur (16) peuvent osciller l'un par rapport à l'autre, le joint homocinétique universel étant **caractérisé en ce que** :

   une surface cylindrique (18a) est formée dans un surface radialement extérieure du roulement extérieur (18) ; une surface de prise plate (24a) qui est en prise avec la surface cylindrique (18a) du roulement extérieur (18) est formée dans une surface latérale de chacune des rainures de guidage (24) de l'élément de joint extérieur (12) ; et la surface cylindrique (18a) du roulement extérieur (18) satisfait les deux équations suivantes,

$$W1 > PCR\,(1 - \cos\theta)\,/\,2 + \mu_3 R3 + \mu_2 R1$$

$$W2 > 3PCR\,(1 - \cos\theta)\,/\,2 - \mu_3 R3 + \mu_2 R1,$$

   dans lequel
   W1 indique une longueur dans une direction axiale de la surface cylindrique (18a) depuis un centre ($O_1$) de la surface cylindrique (18a) dans la direction axiale jusqu'à une partie d'extrémité de la surface cylindrique (18a) sur un côté périphérique extérieur de l'élément de joint extérieur (12) ;
   W2 indique une longueur dans la direction axiale de la surface cylindrique (18a) depuis le centre ($O_1$) de la surface cylindrique (18a) dans la direction axiale jusqu'à une partie d'extrémité de la surface cylindrique (18a) sur un côté de centre de joint de l'élément de joint extérieur (12) ;
   PCR indique une distance d'un axe de l'élément de joint intérieur (14) à un centre ($O_2$) de la sphère convexe (30a) de chacun des axes (30) ;
   $\theta$ indique un angle de joint maximum requis ;
   R1 indique un rayon de la surface cylindrique (18a) du roulement extérieur (18) ;
   R3 indique un rayon de la sphère concave (16a) du roulement intérieur (16) ;
   $\mu_2$ indique un coefficient de frottement quand le roulement intérieur (16) est déplacé par rapport au roulement extérieur (18) dans une direction axiale du roulement intérieur (16) ; et
   $\mu_3$ indique un coefficient de frottement entre la sphère convexe (30a) de chacun des axes (30) et la sphère concave (16a) du roulement intérieur (16).

2. Joint homocinétique universel selon la revendication 1, **caractérisé en ce qu'**une surface conique (18b) dont le diamètre décroît vers une partie d'extrémité est formée dans chacun des deux côtés axialement de la surface cylindrique (18a) du roulement extérieur (18), et une surface conique (24b, 24c) est formée dans la surface latérale de chacune des rainures de guidage (24) en une partie opposée à chaque surface conique (18b) du roulement extérieur (18), la surface conique (24b, 24c) formée dans la surface latérale de chacune des rainures de guidage (24) devenant plus proche d'un plan comprenant un axe du roulement extérieur (18) et un axe de l'élément de joint extérieur (12) vers chacun des deux côtés axialement du roulement extérieur (18).

**3.** Joint homocinétique universel selon la revendication 1 ou 2, **caractérisé en ce qu'**un chanfrein (40) qui est une surface courbée est formé sur chacun des deux côtés axialement de la surface cylindrique (18a) du roulement extérieur (18).

**4.** Joint homocinétique universel selon la revendication 3, **caractérisé en ce qu'**une surface courbée concave (42) est formée dans la surface latérale de chacune des rainures de guidage (24) en une partie opposée à chaque chanfrein (40) du roulement extérieur (18).

**5.** Joint homocinétique universel selon la revendication 1, **caractérisé en ce qu'**une surface conique (18b) dont le diamètre décroît vers une partie d'extrémité est formée dans chacun des deux côtés axialement de la surface cylindrique (18a) du roulement extérieur (18), et une surface courbée convexe (44) qui fait saillie vers un côté intérieur de l'élément de joint extérieur (12) est formée dans la surface latérale de chacune des rainures de guidage (24) en une partie opposée à chaque surface conique (18b) du roulement extérieur (18).

# F I G . 1

# F I G . 2

# FIG.3

# FIG.4

# F I G . 5

# FIG.6

# FIG.7

# FIG.8

# FIG.9

# F I G . 10

## PRIOR ART

# FIG.11

## PRIOR ART

# F I G . 12

## PRIOR ART

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5171185 A
- JP 2002147482 A